# EUROPEAN PATENT APPLICATION

(11) **EP 1 640 701 A2**
(43) Date of publication of application: **29.03.2006**
(21) Application number: 05003693.8
(22) Date of filing: 21.02.2005
(51) Int. Cl.: G01N 1/40

(54) **Method and apparatus for analyte concentration free of intermediate transfer**

(30) Priority: 22.09.2004 US 947844
(71) Applicant: Agilent Technologies Inc. (a Delaware Corporation), Palo Alto, CA 94306-2024 (US)
(72) Inventor: Prest, Harry F., Santa Cruz California 95060 (US)
(74) Representative: Schoppe, Fritz

(57) **Abstract**

The present disclosure provides a method of concentrating an analyte directly into a test receptacle, the method including: placing a liquid containing an analyte into a first receptacle, the first receptacle being in direct fluid communication with a second test receptacle; concentrating the analyte into the second test receptacle; and combining the second test receptacle with an instrument for analysis of the concentrated analyte, wherein the act of combining is accomplished free of an intermediate liquid transfer and free of loss of analyte.

## Description

### Background

Although analytical instrumentation is becoming increasingly sensitive and analyte detection continues to improve, many chemical analytes require concentration prior to chemical analysis. Typically concentration is done using bench-top chemical processes specifically developed or tailored to the analytical problem. Representative of these approaches are solvent condensation or evaporation techniques that eliminate the solvent while retaining the analyte by exploiting differences in physical properties such as volatility. Nitrogen or inert gas "blown-downs", rotary evaporation, Kudema-Danish condensers, distillation (steam, etc.), tube heaters, vacuum evaporation (freeze drying), and related techniques are typical of approaches to pre-concentrate an analyte by removal of a solvent. A number of commercial machines exist specifically for this purpose such as RapidVap™, CentriVap™, SafetyVap™, as examples. These techniques can be time-consuming, labor intensive, transfer intensive, subject to loss of sample or analyte, can require specialized equipment and technical expertise, which lead to increased cost.

In gas chromatography, large volume injection techniques have been developed with special hardware, such as pre-column inlets, to allow more sensitive detection by evaporation of solvent while attempting to retain analyte inside the pre-column inlets prior to the analyte being delivered to the analytical column for chromatographic separation and analysis/detection. Typical volumes are less than or equal to 100 microliters (by single injection) and the most frequent approach is to inject the solution, either in portion or in entirety, evaporate the solvent, which is vented from the chromatograph, and transfer the analyte to the analytical column. This approach suffers from a limitation on volume that can be contained inside the pre-column inlet and, therefore, any increases in volume must be obtained by consecutive injections and evaporation cycles that can result in sample losses. These pre-column inlets that thermally program the vaporization of the solvent are called PTVs.

Another similar approach is the cool-on-column solvent venting arrangements that use a long, large diameter of capillary tubing (approximately 1 mL volume) to retain the injected volume. The operation is again the same as the PTV in that the temperature is programmed to vaporize the solvent and retain the analyte. Again, the injection volume is fixed by the mechanical configuration of the assorted tubing. In both these approaches the ability to retain analytes is determined by the difference in the boiling point between the solvent and the analyte and the ability of the pre-column inlet and/or analytical column (phase) to selectively capture and retain the analyte.

Both the standard volume pre-column inlet arrangements and the existing large volume port technologies are limited in the volume that can be concentrated by the fact that liquid injections vaporize inside the port and by mechanical arrangements (namely, the liquid or vapor volume that can be contained) that place an upper bound on the concentration factors that can be achieved. It would be desirable to obtain an *ex-situ* concentration that is flexible and less constrained in the concentration factors that can be achieved.

In the biochemical and organic chemistry fields there is often a need to concentrate an analyte before it is loaded into an analytical instrument. Concentration improves detection limits of the analysis because a larger fraction of the total sample can be analyzed. For instance, some products may need to be concentrated, because they are expensive to derivatize, difficult to extract, or different to synthesize. Small amounts of product or intermediates are produced and need to be characterized and identified accurately before proceeding to future research steps. However, low concentrations of product can be a problem for a researcher, because they may challenge the limits of instrument sensitivities or increase the possibility of inaccurate abundance measurements. In addition, the transfer of these analytes from a concentrator-condenser apparatus to an instrument, transfer from one instrument to another instrument, or transfer from an instrument to a storage container can result in significant additional so-called mechanical losses of product. For these reasons, a simple method and device that facilitate concentrating and analyzing analytes would be of interest to workers in the field.

Furthermore, the container in which the sample is concentrated is typically small. As a result, repetitive sample transfers and concentration steps are required to obtain a suitable volume and concentration of sample. Each transfer step can result in possible "mechanical" sample loss and can be labor intensive. Also, rinses of the original sample container are typically required to minimize surface losses. Accordingly, existing processes are frequently subject to material losses and are seldom quantitative.

A number of instruments already exist for concentrating analytes. For instance, in the biochemical fields analytes may be concentrated using centrifuges, ultra-centrifuges and filtering. A number of commercial products exist for this purpose. For instance, Amicon™ produces a number of filters that allow for desalting of samples, removal of solvent, and concentration of small amounts of analyte. However, these devices often require access to a centrifuge or micro-centrifuge for spinning the analytes and are effective only when concentrating small volumes.

On a larger scale, typical analyte concentration is performed on the bench top using rotary evaporation, K-D, dry nitrogen blow down or in a PTV injection port by depositing the analyte in a liner and then evaporating the solvent by heating the liner. Each of these methods provides for concentration of analyte by removal of solvent. However, most of these methods and instruments suffer from the limitation of possible loss of analyte. In addition, since the concentration of analyte is performed separately, these methods can be time intensive and laborious. It would, therefore, be of particular interest to be able to concentrate an analyte prior to analysis with an instrument without having to perform intermediate transfers or multiple transfers, or without having to resolvate the analyte, and without loss of the analyte, and without contamination of the analyte.

### Summary

In general terms, the present invention relates to an apparatus and method for concentrating a sample containing an analyte for analysis free of an intermediate liquid transfer and free of a loss of analyte.

One aspect of the invention is a method of concentrating an analyte directly into a test receptacle, the method comprising: placing a liquid containing an analyte into a first receptacle, the first receptacle being in direct fluid communication with a second test receptacle; concentrating the analyte into the second test receptacle; and combining the second test receptacle with an instrument for analysis of the concentrated analyte, wherein the act of combining is accomplished free of an intermediate liquid transfer and free of loss of analyte.

Another aspect of the present invention is an article for concentrating an analyte directly into an insert, the article comprising: a first receptacle having a first aperture and a second aperture; an insert having a third aperture; and a sleeve which connects the second aperture of the first receptacle to the third aperture of the second receptacle, wherein the first receptacle abuts the second receptacle and the second aperture directly opposes the third aperture providing direct liquid and gaseous communication between the first receptacle and the second receptacle.

Yet another aspect of the invention is an article for concentrating an analyte for analysis directly into a test receptacle, the article comprising: a first receptacle having an inlet aperture and an outlet aperture; and a second test receptacle having an aperture, the outlet aperture of the first receptacle being in fluid communication with aperture of the second test receptacle. The second test receptacle can have, for example, a diameter of about 1 inch or less and a length of about 3 inches or less.

### Brief Description of the Drawings

FIG. 1 illustrates in perspective an exemplary article that can be used to concentrate or condense a sample containing an analyte for analysis.
FIG. 2 illustrates a cross-sectional view of the article of FIG. 1 taken along line 2-2 showing the connection of a larger receptacle to an insert by a close fit sleeve.
FIG. 3 illustrates a flow diagram representing an exemplary process for preparing a sample for analysis.

### Detailed Description

Various embodiments of the present disclosure will be described in detail with reference to drawings, if any. Reference to various embodiments does not limit the scope of the disclosure, which is limited only by the scope of the claims attached hereto. Additionally, any examples set forth in this specification are not intended to be limiting and merely set forth some of the many possible embodiments for the present disclosure.

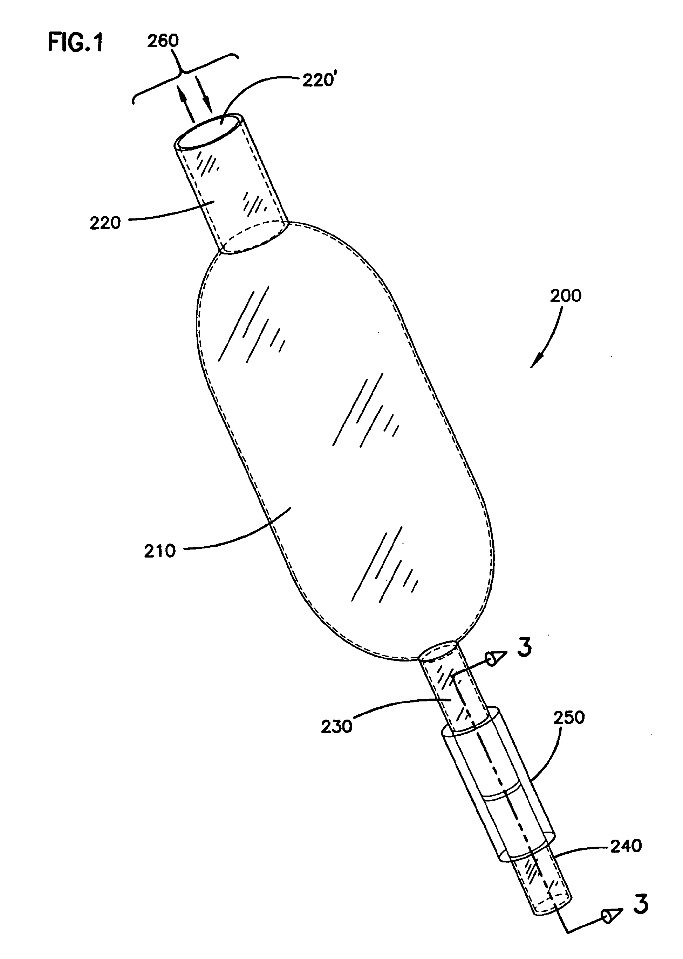

FIG. 1 illustrates one possible embodiment of an article (200) for use in preparing a concentrated sample for analysis. A first receptacle (210) has a first extension (220) and a second extension (230). A second receptacle (240), such as an insert, has a third aperture (270). A sleeve (250) holds the second extension (230) of the first receptacle (210) and the second receptacle (240). The first extension (220) defines a first aperture (220') and the second extension (230) defines a second aperture (230'). The first receptacle (210) has a larger interior volume than the second receptacle (240).

In one possible embodiment, the first receptacle (210) is elongated and the first and second extensions (220) and (230) are on oppositely disposed ends of the first receptacle (210). In other possible embodiments, the first receptacle (210) is a test tube, a round-bottomed flask, a rotovap flask, a KD-tube, and the like. The first extension (220) can have a structure such as a tapered joint, a press-fit joint, a threaded screw, and like members, or combinations thereof, that can be attached to other equipment (260) to facilitate the concentration or condensation of the sample such as a rotovap, a source of vacuum or vacuum line, a source of continuous purge gas, and like equipment, or combinations thereof. The first (210) and second (220) extensions and can include any type of nipple, tube, or other type of protrusion.

The second extension (230) desirably abuts the second receptacle (240) so that the second aperture (230') flows directly into third aperture (270) of the second receptacle (240) and permits liquid and gaseous communication between the first receptacle (210) and the second receptacle (240). This configuration further permits liquid and gaseous communication between the second receptacle (240) and evaporation or condensation assist equipment (260). In other possible embodiments, the second extension (230) has a structure such as a tapered joint, a press-fit joint, a threaded screw, and like members, or combinations thereof, that can be attached to other equipment.

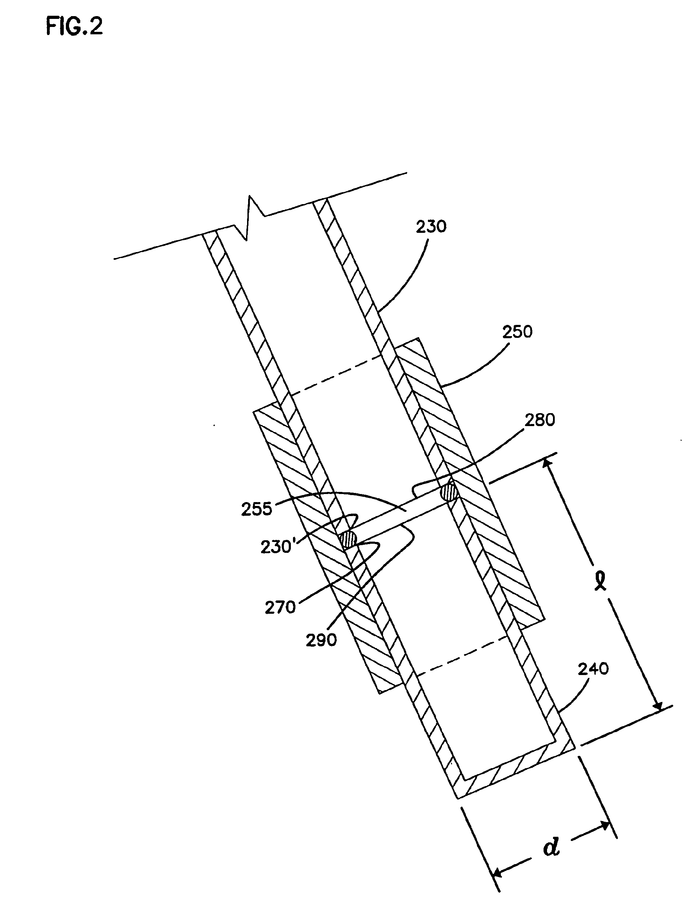

Referring to FIGS. 1 and 2, the sleeve (250) is a close fitting and sealing sleeve. In one possible embodiment, is formed with an inert, conformable material having properties such as low porosity, low liquid absorptivity, low mechanical deformability, resiliency, and moderate flexibility. Examples of materials that can be used to form the sleeve (250) include polymeric materials such as Teflon® (PTFE, polytetrafluoroethylene) or like materials.

The second aperture (230') is defined by a first substantially planar and circular rim (280). The third aperture (270) is also formed with a second substantially planar and circular rim (290). The diameters of the first and second substantially planar rims (280) and (290) are substantially equal.

The sleeve (250) holds the first and second receptacles (210) and (240) so that the second extension (230) abuts the second receptacle (240) so that the second aperture (230') directly opposes the third aperture (270), and the junction between the second extension (230) and the second receptacle (240) is surrounded by the sleeve (250) so that there is no or minimal contact or exposure between the sleeve material and sample or analyte material within the first receptacle, the insert, or the second extension (230).

The sleeve's (255) inertness, minimal or zero contact with the sample solution, ability to maintain a leak-proof seal over the working temperature ranges of common solvents and derivatizing agents, and capability to quickly release the insert to an operator or robot, enable the method and the article of the present disclosure.

In another possible embodiment, a seal member or gasket (255), such as an O-ring or like inert spacer, is positioned between the second extension (230) and the second receptacle (220) to provide a tighter seal and avoid, for example, glass-on-glass frictional wear, charging, or wear contamination. An optional gasket (255) may also be indicated, for example, where quantitative recoveries are desired, in preparing highly penetrating sample materials, such as silicone lubricants, in preparing highly shock-sensitive, corrosive, or toxic sample materials, in using higher vacuum, and like logistical considerations. In one configuration of this embodiment, the second aperture (230') is still directly opposing the third aperture (270).

In one possible embodiment, the second receptacle (240) has a length, *l*, that is about 3 inches or less and an outer diameter, *d*, that is about 1 inch or less. In another possible embodiment, the length, *l*, is in the range of about 0.5 inch to about 2.5 inches, and the diameter, *d*, is in the range from about 0.2 to about 0.8 inch. This structure allows concentrating the analyte into an insert that can be directly placed in the instrumentation for analysis.

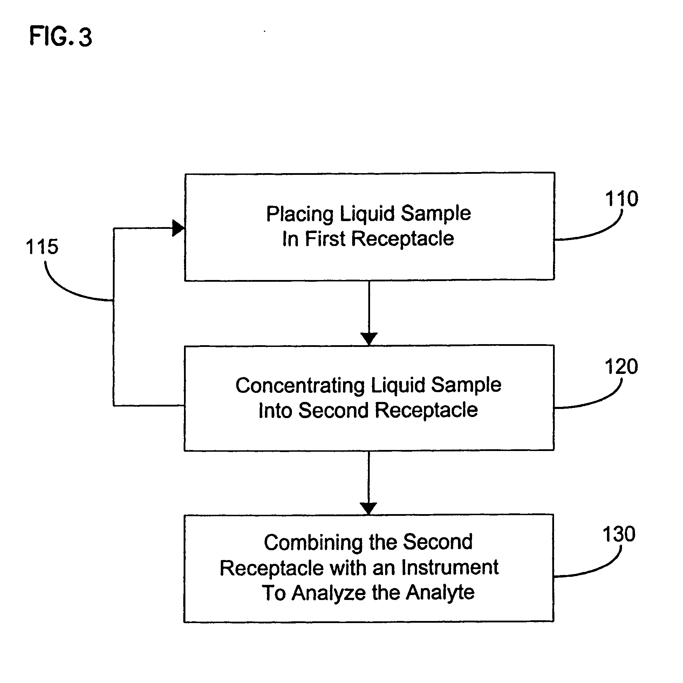

FIG. 3 illustrates a method of concentrating analyte. Although the method is described using the article (200) described herein, it could be performed using other articles and other structures. At operation (110), the liquid sample is placed in the first receptacle (210) through the first aperture (220') for concentrating or condensing. At operation (120), the analyte is concentrated directly into the second receptacle (240). The concentrate or condensate continually migrates or congregates into the second receptacle (240), free of intermediate transfers, until a desired volume is obtained and residing substantially in the second receptacle (240). An advantage is that the mechanical losses and manual labor associated with multiple transfers of existing methods and evaporation equipment can be substantially reduced or eliminated with the method and article of the present disclosure in embodiments. At operation (130), after the desired amount and concentration of analyte is in the second receptacle (240), the second receptacle (240) is separated from the sleeve (250) and combined with an instrument for analysis of the concentrated analyte. The operation (130) is performed free of an intermediate liquid transfer and free of a loss of analyte.

An intermediate transfer is the act of collecting and removing analyte from a condenser or concentrator apparatus and moving it to another apparatus. In the present disclosure there are no intermediate transfers of analyte. In the present disclosure all the analyte collected in the insert portion (i.e., the second test receptacle) of the article is moved at once, that is in a single step, to another apparatus for analysis and without removing the analyte from the insert. By avoiding or being free of intermediate transfers the present method and article advantageously avoids loss of analyte, avoids lowered yields, avoids analyte contamination, avoids impacts on quantitative analyses, and like considerations.

The initial charge of sample in the first receptacle (210) can be, for example, a liquid containing one or more analytes, a mixture containing one or more analytes and one or more derivatizing reactants or reagents, and like mixtures, or combinations thereof. In embodiments, the liquid component of a liquid containing an analyte is desirably more volatile than the analyte thereby affording efficient analyte concentration. In embodiments, a derivatization mixture containing the product of a condensed analyte is desirably less volatile than the byproduct gases, liquids, or solvents of the mixture thereby affording efficient analyte condensation, separation, and concentration.

Additionally, fresh or additional sample (115) can be placed in the first receptacle (210) continuously or in batch, for example, after or concurrently with the concentration of an initial charge of sample in the first receptacle (210). Placing additional sample in the first receptacle (210) can be desirable where, for example, large sample volumes or dilute analyte volumes are involved. Placing additional sample in the first receptacle (210) can also be desirable where, for example, the analyte adheres to the walls of the first receptacle. The additional sample provides a gravity assisted rinse or flush to further urge analyte into the second receptacle (240).

Furthermore, the walls of the first receptacle (210) can be optionally rinsed *in situ* or *ex situ* with, for example, a suitable wash liquid, and the resulting rinse descends into the insert where the rinse can be further condensed or concentrated to. When the desired volume of sample is achieved in the second receptacle (240), the second receptacle (240) and the first receptacle (210) are separated by disengaging or unplugging the second receptacle (240) from the sleeve's (250) hold. The second receptacle (240) can be separated by an operator or robot.

In one possible embodiment, the act of concentrating can, increase the analyte concentration by a factor of from about 2 to 1,000 times or more depending on the concentration of the analyte in the starting sample and the desired concentration of the resulting concentrated analyte. Additionally, a possible concentration of the analyte is neat, that is free of, for example, solvent, liquid carriers, reactants, reagents, and like volatile components. In embodiments, large liquid volumes, such as about greater than about 1 mL to about 100 mL can be conveniently and efficiently concentrated to an analyte concentrate, for example, on the order of about 100 microliters or less without volume losses of the initial dilute sample or of the resulting concentrate.

In at least some possible embodiments, the act of concentrating comprises evaporating the liquid or other volatiles from the analyte and condensing the evaporate vapor away from the analyte, for example, in a remote collection vessel. Evaporating the liquid from the analyte, and condensing the evaporated liquid can be accomplished with known evaporation, distillation, condensation, and like equipment, such as with an external or internal heater, a remote cool-condensing surface, a source of vacuum, a controllable continuous gas stream, and like means, or combinations thereof.

Accordingly, concentrating the mixture includes evaporating a volatile from the mixture by, for example, heating the receptacle, the insert, or both; evacuating the receptacle, the insert, or both; or simultaneously heating and evacuating both the receptacle and the insert. Evaporating a volatile from the mixture can be accomplished by, for example, heating, evacuating, or combinations thereof, a portion of the article to further volatilize a component in the mixture. A volatile can comprise a solvent, a liquid, a gas, or combinations thereof. In possible embodiments, the first receptacle (210) and the second receptacle (240) can be simultaneously heated or cooled. Additionally, the first receptacle can be heated to facilitate evaporation while the insert can be maintained at a lower temperature to, for example, facilitate analyte congregation or crystallization, or minimize thermal degradation of, for example, temperature sensitive analytes.

The instrument with which the second receptacle can be combined can include any analytical instrument or device for analyzing compounds or complex mixtures of compounds. Examples of instruments include a gas chromatograph, a liquid chromatograph, a mass spectrometer, an NMR spectrometer, an IR spectrophotometer, an UV spectrophotometer, a Raman spectrophotometer, an electrophoresis apparatus, and like instruments, or combinations thereof, such as an LC/MS/MS instrument. Analyzing can include separating compounds, identifying such as characterizing compounds, or both. The analytical instrument can further comprise, for example, a sample handling device or sample manipulator device, such as an auto-sampler, an auto-injector with or without a pre-column inlet having an inlet port, a head-space port, and like devices, or combinations thereof.

### Example 1

The PTA device has been applied to the concentration and transfer-less analysis of pesticides, polychlorinated biphenyls (PCBs), and polyaromatic hydrocarbons (PAHs). In one example, samples contained in volatile solvent (dichloromethane) from size-exclusion eluted fractions were concentrated with the disclosed article and method from volumes greater than about 10 milliliters of solution to a volume of about 200 microliters into a 300 microliter GC autosampler glass vial insert. Examining the PAHs, which show a broad range in volatility and adsorption, recoveries were essentially 100% for higher ring PAHs and greater than about 70% for naphthalene. The higher ring PAHs, which typically adsorb to surfaces and are difficult to recover, were recovered because multiple rinses of the upper receptacle (210) could be used to avoid the problem of analyte loss in intermediate mechanical transfer(s) of the rinse. The volatile naphthalenes (parent and alkyl substituted compounds) were recovered in excellent yield because relatively gentle evaporation conditions could be applied, that is for example, relatively low temperatures and low evaporating gas flow.

A similar application to pesticides and PCBs using evaporation of either or both dichloromethane and hexane solvents into an isooctane "keeper" showed essentially 100 % recovery, even for the more volatile pesticides such as the hexachlorocyclohexanes (e.g., Lindane) and hexachlorobenzene. This was conducted under dry nitrogen blowdown.

### Example 2

To extend (lower) detection limits, a sample previously analyzed at 1 milliliter volume was transferred to the article and condensed to 100 microliters using a vial insert as in Example 1, and re-analysed. Several rinses of the original vial were accomplished and combined prior to the evaporation step using the PTA article. This use of the PTA eliminated the repetitive steps of transferring a small portion of the sample, or rinsing solvent, to the very small volume insert. The sample was carefully condensed by evaporating the solvent. Complete evaporation of the solvent to dryness was avoided. Additional portions of the sample were added to the first receptacle or the first receptacle was rinsed as appropriate, and then evaporation continued until a suitable quantity of concentrated analyte was obtained in the test insert vial. The PTA allowed the entire concentrated sample to be-transferred all at once, including the resulting concentrate obtained from all rinses. Optionally, the evaporation could be accomplished in a single step (versus multiple condensing steps) thus minimizing the loss of more volatile analytes and minimizing the opportunity for the sample to go to dryness. A tenfold decrease in sample volume was obtained which allowed analyte analysis by full-scan mass spectrometry, instead of selected ion monitoring, which allowed a search for unknown compounds to be conducted.

The entire disclosure for publications, patents, and patent documents are incorporated herein by reference in their entirety, as though individually incorporated by reference. The disclosure has been described with reference to various specific embodiments and techniques. However, it should be understood that many variations and modifications are possible while remaining within the spirit and scope of the disclosure.

## Claims

1. A method of concentrating an analyte directly into a test receptacle, the method comprising:
placing a liquid containing an analyte into a first receptacle;
concentrating the analyte directly from the first receptacle into the second receptacle; and
combining the second test receptacle with an instrument for analysis of the concentrated analyte, wherein the act of combining is accomplished free of an intermediate liquid transfer and free of loss of analyte.

2. The method of claim 1 wherein the act of concentrating comprises evaporating the liquid from an analyte.

3. The method of claim 1 wherein the act of concentrating further comprises repeatedly evaporating the liquid containing an analyte and rinsing additional liquid and optionally further evaporating until a desired concentration of analyte is achieved in the second receptacle.

4. The method of claim 1 wherein the act of concentrating comprises evaporating volatiles from a liquid comprising a mixture of an analyte and a derivatizing agent.

5. The method of claim 1 wherein act of concentrating increases the analyte concentration by a factor of from about 2 to 1,000 times.

6. The method of claim 1 wherein the instrument comprises a gas chromatograph, a liquid chromatograph, a mass spectrometer, an NMR spectrometer, an IR spectrophotometer, an UV spectrophotometer, a Visible spectrophotometer, a Raman spectrophotometer, an electrophoresis device, a gravimetric apparatus, an electrochemical apparatus, or combinations thereof.

7. An article for concentrating an analyte directly into an insert, the article comprising:
a first receptacle having a first aperture and a second aperture;
an insert having a third aperture; and
a sleeve which connects the second aperture of the first receptacle to the third aperture of the second receptacle, wherein the first receptacle abuts the second receptacle and the second aperture directly opposes the third aperture providing direct liquid and gaseous communication between the first receptacle and the second receptacle.

8. An article for concentrating an analyte for analysis directly into a test receptacle, the article comprising:
a first receptacle having an inlet aperture and an outlet aperture; and
a second test receptacle having an aperture, the outlet aperture of the first receptacle being in fluid communication with aperture of the second test receptacle, the second test receptacle having a diameter of about 1 inch or less and a length of about 3 inches or less.

9. The article of claim 8 further comprising a sleeve, the sleeve removably connecting the first receptacle to the second receptacle.

10. The article of claim 8 further comprising an instrument sized to directly receive the second test receptacle, the instrument selected from the group consisting essentially of a gas chromatograph, a liquid chromatograph, a mass spectrometer, an NMR spectrometer, an IR spectrophotometer, an UV spectrophotometer, a Visible spectrophotometer, a Raman spectrophotometer, an electrophoresis device, a gravimetric apparatus, an electrochemical apparatus, and combinations thereof.
